# FASCICULE DE BREVET EUROPEEN

(11) **EP 4 200 168 B1**
(45) Date de publication et mention de la délivrance du brevet: **14.05.2025**
(21) Numéro de dépôt: 21752062.6
(22) Date de dépôt: 30.07.2021
(51) Int. Cl.: B60S 1/48, B60S 1/52, B05B 1/22

(54) **DISPOSITIF DE PROJECTION DE FLUIDE POUR LE NETTOYAGE D'UNE SURFACE D'UN VÉHICULE AUTOMOBILE**
FLUIDSPRÜHVORRICHTUNG ZUR REINIGUNG EINER OBERFLÄCHE EINES KRAFTFAHRZEUGS
FLUID SPRAYING DEVICE FOR CLEANING A SURFACE OF A MOTOR VEHICLE

(30) Priorité: 24.08.2020 FR 2008626
(43) Date de publication de la demande: 28.06.2023
(73) Titulaire: Valeo Systèmes d'Essuyage, 78322 Le Mesnil Saint Denis (FR)
(72) Inventeur: BAUDOUIN, Maxime, 78322 LE MESNIL SAINT DENIS (FR); GRASSO, Giuseppe, 78322 LE MESNIL SAINT DENIS (FR); THEBAULT, Denis, 78322 LE MESNIL SAINT DENIS (FR); DOLLE, Yoann, 78322 LE MESNIL SAINT DENIS (FR); PERET, Adrien, 78322 LE MESNIL SAINT DENIS (FR)
(74) Mandataire: Valeo Visibility
(86) Numéro de dépôt international: PCT/EP2021/071407
(87) Numéro de publication internationale: WO 2022/043000

(56) Documents cités:
- EP-A1- 3 333 026
- WO-A1-2020/078703
- WO-A1-2022/238790
- DE-A1- 19 537 790
- FR-A1- 3 085 652
- US-A1- 2013 092 758
- US-A1- 2019 270 433
- US-A1- 2020 189 530

## Description

La présente invention s'inscrit dans le domaine des systèmes de nettoyage de capteur optique de véhicule automobile, et concerne plus particulièrement un dispositif de projection de fluide de nettoyage, notamment équipé d'une électrovanne, intégré à un tel système de nettoyage.

Les véhicules récents sont régulièrement équipés de systèmes d'assistance à la conduite, que ce soit pour aider le conducteur lors de manœuvres de stationnement, lors de conduites dans le trafic par rapport aux autres véhicules, ou que ce soit pour remplacer le conducteur dans des véhicules à conduite autonome. Chacun de ces systèmes comportent au moins un capteur, permettant d'identifier l'environnement du véhicule, le capteur pouvant consister par exemple, et de manière non exhaustive, en une caméra ou un radar.

Chaque capteur est configuré pour acquérir une donnée relative à l'environnement entourant le véhicule et est à cet effet exposé à différents types de projection ou salissures qui peuvent pénaliser par la suite la fiabilité des données acquises. Or, et notamment lorsque ces capteurs sont mis en œuvre dans le cadre d'une fonction de conduite autonome quel que soit son degré d'autonomie, il est essentiel pour la sécurité de l'ensemble des usagers de la route que les données acquises soient fiables.

Dans ce contexte, les capteurs sont couramment équipés d'installations de nettoyages, qui peuvent prendre différentes formes et parmi lesquelles on connait des installations comprenant un système de projection de fluide de nettoyage sur la surface optique des capteurs.

Ces systèmes de projection de fluide de nettoyage comportent au moins un corps agencé à proximité du capteur pour diriger le fluide sur la surface optique et un conduit par lequel le fluide de nettoyage arrive dans le corps, depuis un réservoir de stockage. Ces systèmes de projection peuvent comporter par ailleurs d'autres composants et notamment des électrovannes reliées à un circuit de commande électronique par exemple, le pilotage de ces électrovannes permettant de bloquer ou d'autoriser l'arrivée du fluide de nettoyage dans le corps pour sa projection sur la surface optique.

Le nombre important de capteurs optiques implantés sur le véhicule, pour réaliser chacune des fonctions d'assistance de conduite proposées sur le véhicule, impose de prévoir une pluralité de dispositifs de projection de fluide, chacun étant associé à un capteur et comportant un organe de projection de fluide dirigé vers la surface optique à nettoyer de ce capteur.

Il est connu d'équiper chacun de ces dispositifs de projection d'une électrovanne pilotée pour autoriser ou bloquer l'arrivée de fluide nettoyant en direction de l'organe de projection correspondant, étant compris qu'il est souhaitable de pouvoir nettoyer spécifiquement tel ou tel capteur sale sans pour autant nettoyer le reste des capteurs immaculés, dans un souci d'économie de fluide de nettoyage.

Plus particulièrement, dans l'art antérieur, il est connu de disposer une batterie d'électrovannes les unes à côté des autres, au voisinage de l'unité électronique de commande permettant de les piloter, et de prévoir une liaison entre chaque électrovanne et l'organe de projection de fluide correspondant par un conduit flexible acheminant le fluide de nettoyage depuis l'électrovanne.

Le document US2019270422 A1 divulgue un exemple de dispositif de projection de fluide pour le nettoyage d'une surface d'un véhicule automobile.

L'invention s'inscrit dans ce contexte et vise à améliorer des performances d'une telle architecture, et notamment le temps de réponse entre l'activation de l'électrovanne autorisant ou bloquant le passage de fluide de nettoyage en direction de l'organe de projection et la projection, ou l'arrêt de projection, effectivement constaté au niveau de la sortie de l'organe de projection. Il convient de comprendre que la réduction de ce temps de réponse permet d'affiner encore la qualité des informations acquises par le capteur.

La présente invention a ainsi pour principal objet un dispositif de projection de fluide pour un système de nettoyage d'une surface d'un véhicule automobile, le dispositif de projection comprenant une électrovanne configurée pour autoriser ou bloquer le passage de fluide en direction d'un organe de projection, ladite électrovanne comportant un système hydraulique et un système électromagnétique, le système hydraulique comprenant au moins un organe de distribution de fluide qui comporte au moins un embout d'entrée de fluide, une chambre de circulation et un embout de sortie de fluide en communication fluidique avec l'organe de projection, le système électromagnétique étant configuré pour autoriser ou bloquer le passage de fluide au travers de la chambre de circulation, caractérisée en ce que l'organe de projection comprend au moins un tube de raccordement et une buse de projection formés d'un seul tenant, le tube de raccordement étant directement fixé sur l'embout de sortie de fluide.

En d'autres termes, la présente invention propose un dispositif de projection particulier en ce qu'il comprend une électrovanne sur laquelle l'organe de projection est directement fixé sans l'intermédiaire d'un conduit flexible. De la sorte, on améliore le temps de réponse dans la mise en œuvre ou le blocage de la projection de fluide de nettoyage sur la surface à nettoyer, le fluide étant autorisé à passer au sein de l'électrovanne se trouvant directement dans l'organe de projection en sortie de l'électrovanne, sans qu'il soit nécessaire de circuler au sein d'un conduit flexible.

L'électrovanne permet de contrôler la circulation d'un fluide de nettoyage d'un système de nettoyage, le fluide circulant dans le système hydraulique en traversant respectivement l'embout d'entrée de fluide, la chambre de circulation et l'embout de sortie de fluide avant de pénétrer dans l'organe de projection. Le système électromagnétique peut recevoir une commande ordonnant de bloquer la circulation du fluide dans la chambre de circulation ou de laisser libre cette circulation. Pour cela, le système électromagnétique comprend un organe capable de recevoir cette commande, de la traiter et d'induire une action mécanique bloquant ou laissant libre la circulation du fluide.

Le fluide de nettoyage peut être tout type de fluide dès lors qu'il permet une action de nettoyage de la surface sur laquelle il est projeté, et peut notamment consister en de l'air, de l'eau, de l'eau savonneuse ou tout autre produit utilisé généralement pour le nettoyage d'une surface. Par ailleurs, la surface sur laquelle est projeté le fluide peut ici consister en différents types de surfaces du véhicule et notamment des surfaces vitrées de type surface optique d'un capteur/émetteur, et par exemple une surface optique d'un dispositif optique émetteur ou d'un dispositif optique récepteur.

Le tube de raccordement entoure l'embout de sortie de fluide d'une part pour permettre une continuité du passage de fluide de nettoyage en direction de la buse de projection ménagée en bout de l'organe de projection et d'autre part pour permettre la fixation de l'organe de projection directement sur l'électrovanne, sans conduit flexible interposé.

L'organe de distribution et le tube de raccordement peuvent être considérés comme des corps rigides en ce que ces éléments ne sont pas ou peu déformables élastiquement de sorte qu'ils présentent l'avantage de garder leur forme générale une fois le dispositif de projection assemblé, malgré les contraintes qui peuvent leur être imposées dans leur condition d'utilisation standard. Notamment, par tube de raccordement rigide, on comprend que le tube de raccordement est différent d'un conduit flexible.

Le tube de raccordement et la buse de projection sont formés d'un seul tenant, ce qui signifie qu'ils forment des parties d'une même pièce monobloc et qu'ils ne peuvent être écartés l'un de l'autre sans destruction de l'organe de projection qu'ils participent à former.

Selon une caractéristique optionnelle de l'invention, l'organe de projection peut comprendre un corps de distribution interposé entre le tube de raccordement et la buse de projection, notamment pour donner un profil coudé à l'organe de projection. Il convient là encore de comprendre que chacune de ces parties participe à former l'organe de projection d'un seul tenant. Le corps de distribution prend la forme d'un tuyau rigide connecté d'une part au tube de raccordement et d'autre part à la buse de projection, et chacune de ces parties est configurée pour laisser passage au fluide de nettoyage afin qu'il puisse circuler depuis la première extrémité du tube de raccordement tournée vers l'électrovanne jusqu'à la buse de projection.

Selon une caractéristique optionnelle de l'invention, l'organe de projection est fixé directement sur l'embout de sortie de fluide par des moyens de fixation réversible.

L'organe de projection peut ainsi être monté ou démonté de l'embout de sortie de fluide et donc de l'électrovanne. On comprend par « réversible » que le montage et le démontage de l'organe de projection n'entraîne pas la casse de l'un des éléments de l'électrovanne, de sorte qu'ils peuvent être réalisés plusieurs fois, et que ce montage et démontage nécessite l'intervention d'un utilisateur, les vibrations pouvant avoir lieu dans des conditions normales de roulage ne pouvant désolidariser à elles seules l'organe de projection et l'électrovanne.

Selon une série de caractéristiques de l'invention, prises seules ou en combinaison, on peut prévoir que :
les moyens de fixation réversible sont portés respectivement par l'embout de sortie de fluide et par le tube de raccordement de l'organe de projection, au moins l'un parmi l'embout de sortie de fluide et le tube de raccordement étant apte à prendre différentes positions par déformation élastique ;
les moyens de fixation réversible comportent un doigt d'encliquetage formant saillie d'une paroi délimitant un manchon formant l'embout de sortie de fluide, ledit doigt d'encliquetage étant configuré pour coopérer avec une trouée formée dans la paroi délimitant le tube de raccordement ;
les moyens de fixation réversible comportent une excroissance formant saillie d'une paroi délimitant le tube de raccordement vers l'intérieur de ce tube de raccordement et configurée pour coopérer avec une butée formée en saillie d'un manchon formant l'embout de sortie de fluide, après déformation élastique de la paroi porteuse de l'excroissance et/ou du manchon porteur de la butée.

Ces caractéristiques mettent notamment en œuvre un système d'encliquetage permettant la fixation de l'organe de projection sur l'électrovanne. On comprend par « encliquetage » qu'un des éléments se déforme légèrement sous l'application d'une force puis reprend sa forme initiale en bloquant la position de l'organe de projection et du corps rigide. Ce système d'encliquetage permet d'éviter d'avoir recours à une technique particulière de fixation telle qu'un collage, soudage ou autre.

Selon une caractéristique optionnelle de l'invention, les moyens de fixation réversible comportent un élément de blocage distinct de l'organe de projection et de l'embout de sortie de fluide, l'élément de blocage étant déformable élastiquement et apte à coopérer avec au moins une trouée formée dans la paroi délimitant le tube de raccordement.

Selon une autre caractéristique optionnelle de l'invention, le dispositif de projection comprend en outre un dispositif de détrompage.

L'organe de projection a pour fonction de projeter un fluide sur une surface du véhicule, et notamment une surface optique d'un capteur/émetteur à proximité duquel est disposé l'organe de projection. Pour cela, la buse de projection doit être positionnée de sorte que le jet de fluide de nettoyage sortant de la buse de projection soit correctement orienté en direction de la surface optique. Le dispositif de détrompage permet de proposer un seul sens de montage possible de l'organe de projection sur l'organe de distribution de sorte que l'organe de projection, et par extension la buse de projection, ne peut ainsi être positionné que d'une manière sur l'organe de distribution, afin de limiter une erreur potentielle de montage et assurer ainsi le bon positionnement de la buse de projection.

Selon une caractéristique optionnelle de l'invention, le dispositif de détrompage comporte une pluralité de pattes de positionnement formant saillie du tube de raccordement de manière à recouvrir au moins partiellement l'organe de distribution et parmi lesquelles au moins une patte de positionnement présente une forme et/ou des dimensions différentes de celles des autres pattes de positionnement, le dispositif de détrompage comportant en outre un muret formé en périphérie de l'organe de distribution pour coopérer avec la patte de positionnement de forme et/ou de dimensions différentes de celle des autres pattes de positionnement.

Selon une autre caractéristique optionnelle de l'invention, le dispositif de détrompage peut comprendre un système de réglage de la position de l'organe de projection.

On comprend que le dispositif de détrompage de l'organe de projection n'autorise qu'un sens de montage possible et fige donc la position de l'organe de projection par rapport à un référentiel de l'électrovanne, et par exemple un muret formé en périphérie de l'organe de distribution. Le système de réglage de la position de l'organe de projection permet d'adapter la position de ce référentiel, une fois l'organe de projection monté sur l'organe de distribution ou préalablement à ceci, pour ajuster au final la position de l'organe de projection par rapport à la surface à nettoyer. A titre d'exemple, le référentiel peut être solidaire d'une bague crantée montée sur l'organe de distribution de l'électrovanne et susceptible d'être réglée puis figée en position au degré près.

Selon une autre caractéristique optionnelle de l'invention, l'embout de sortie de fluide présente une extrémité libre chanfreinée pour faciliter le montage de l'organe de projection autour de cet embout de sortie.

L'organe de projection est monté sur l'embout de sortie de fluide, pour être rendu solidaire de l'électrovanne, en faisant coulisser le tube de raccordement autour du manchon formant l'embout de sortie de fluide. Le chanfrein à l'extrémité de l'embout de sortie de fluide facilite ainsi la pénétration du manchon dans le tube de raccordement.

Selon une caractéristique optionnelle de l'invention, l'organe de projection comporte un conduit d'acheminement, qui s'étend au sein de l'organe de projection de manière continue depuis le tube de raccordement jusqu'à la buse de projection, et dans lequel est inséré l'embout de sortie de fluide, le conduit d'acheminement comportant un épaulement agencé entre deux segments du conduit d'acheminement qui présentent des sections de passage différentes, l'épaulement formant butée à l'insertion de l'embout de sortie de fluide dans l'organe de projection.

La présente invention a également pour objet un système de nettoyage d'une surface d'un véhicule automobile comprenant une pompe acheminant un fluide de nettoyage à travers un conduit jusqu'à au moins une électrovanne d'un dispositif de projection tel que précédemment décrit, l'électrovanne étant configurée pour autoriser ou bloquer la projection du fluide sur la surface via l'organe de projection.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation schématique d'un véhicule automobile équipé d'un système d'assistance à la conduite comportant plusieurs capteurs, chaque capteur étant ici associé à un dispositif de projection de fluide de nettoyage selon l'invention, avec une électrovanne et un organe de projection solidaires sans conduit flexible interposé entre eux ;
[Fig. 2] est une représentation schématique partielle, en perspective, d'un système de nettoyage équipé de deux dispositifs de projection de fluide de nettoyage selon l'invention configurés pour projeter du fluide de nettoyage sur une surface optique d'un capteur ;
[Fig. 3] est une représentation en perspective d'un dispositif de projection de fluide de nettoyage selon un premier mode de réalisation de l'invention ;
[Fig. 4] est une représentation selon un autre angle de perspective du dispositif de projection de fluide de nettoyage représenté sur la figure 3 ;
[Fig. 5] est une vue éclatée du dispositif de projection de fluide de nettoyage représenté sur la figure 3 ;
[Fig. 6] est une vue en coupe longitudinale du dispositif de projection de fluide de nettoyage représenté sur la figure 3 ;
[Fig. 7] est une vue en perspective donnant des détails de composants du dispositif de projection de fluide de nettoyage représenté sur la figure 3 parmi lesquels un organe de distribution de l'électrovanne et un organe de projection ;
[Fig. 8] est une vue en perspective de l'organe de projection de la figure 7 ;
[Fig. 9] est une représentation partielle, en perspective, d'un dispositif de projection selon un deuxième mode de réalisation, rendant ici visible l'organe de distribution de l'électrovanne et l'organe de projection ;
[Fig. 10] est une coupe longitudinale d'une partie de l'organe de distribution et de l'organe de projection de la figure 9 ;
[Fig. 11] est une représentation partielle, en perspective, d'un dispositif de projection selon un troisième mode de réalisation, rendant ici visible l'organe de distribution de l'électrovanne et l'organe de projection ;
[Fig. 12] est une coupe longitudinale d'une partie de l'organe de distribution et de l'organe de projection de la figure 11.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

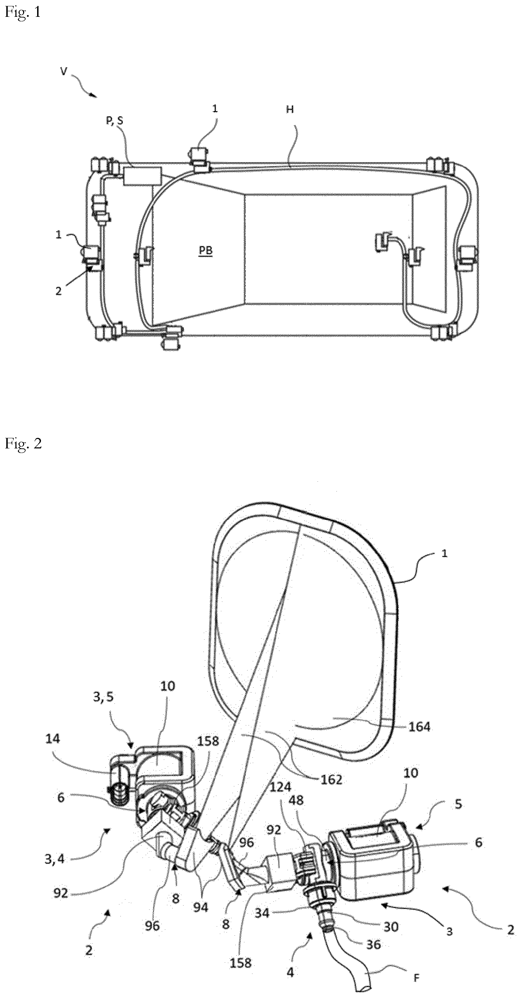

A la figure 1, on a représenté un véhicule V automobile équipé d'un système de nettoyage selon l'invention, qui permet le nettoyage d'au moins une surface du véhicule. Une telle surface à nettoyer peut consister par exemple en un pare-brise PB ou bien une lunette arrière du véhicule, ou elle peut consister en une surface optique d'un des capteurs/émetteurs optiques 1 équipant le véhicule.

Le système de nettoyage comprend notamment un conduit, ou bus de circulation hydraulique, H apte à permettre la circulation d'un fluide de nettoyage et des dispositifs de projection 2 du fluide de nettoyage disposés dans le véhicule en étant respectivement associés à l'un des capteurs/émetteurs optiques 1. Dans l'exemple illustré sur la figure 1, un dispositif de projection 2 est spécifiquement dédié au nettoyage d'une unique surface vitrée, mais on comprendra à la lecture de la figure 2 par exemple que plusieurs dispositifs de projection 2 peuvent être dédiés au nettoyage d'une même surface vitrée dès lors que conformément à ce qui va être décrit chaque dispositif de projection 2 comporte une électrovanne dédiée et sur laquelle est fixé directement un organe de projection.

Plus particulièrement, dans l'exemple illustré, chacun des dispositifs de projection 2 est relié hydrauliquement au bus de distribution hydraulique H, par exemple par des flexibles d'alimentation F partiellement représentés sur la figure 2, et ces dispositifs de projection 2 sont reliés à ce bus de distribution hydraulique de manière indépendante l'un de l'autre, et dans des zones distinctes et successives du bus de distribution hydraulique qui forme ici un bus commun à la pluralité des dispositifs de projection. Dans cet exemple, non limitatif, de mise en œuvre sur le véhicule, on comprend qu'un unique bus de distribution hydraulique assure l'alimentation en produit nettoyant de l'ensemble des dispositifs de projection 2 montés sur ce véhicule.

Le système de nettoyage comprend par ailleurs une pompe P et un réservoir de stockage de fluide de nettoyage S. La pompe P est configurée pour récupérer le fluide de nettoyage dans le réservoir de stockage et pour alimenter le bus de distribution hydraulique H de manière continue en fluide de nettoyage.

Dans ce contexte, des dispositifs de projection 2 sont destinés aussi bien à nettoyer une surface optique d'un capteur/émetteur 1 servant à une analyse automatique de la scène de route, c'est-à-dire une analyse par l'électronique du véhicule pour notamment le pilotage d'un dispositif d'aide à la conduite et/ou à la manœuvre de ce véhicule, qu'à nettoyer une surface vitrée de l'habitacle ou une surface optique d'un capteur/émetteur servant uniquement à l'analyse directe par le conducteur du véhicule. Par surface optique d'un capteur/émetteur, il convient de comprendre que le système de nettoyage selon l'invention est applicable aussi bien au nettoyage des dispositifs optiques émetteurs, au nettoyage des dispositifs optiques récepteurs, ou au nettoyage des dispositifs optiques émetteurs/récepteurs.

Pour optimiser le nettoyage d'une surface vitrée et par exemple d'une surface optique d'un capteur optique, deux dispositifs de projection 2 peuvent être agencés au voisinage l'un de l'autre pour que leurs organes de projection respectifs soient orientés vers une même surface vitrée, tel qu'illustré sur la figure 2. Chacun des dispositifs de projection est ici disposé symétriquement l'un par rapport à l'autre selon un plan perpendiculaire à la surface vitrée, de sorte à optimiser la projection de fluide de nettoyage 162 ici sur la surface optique 164 d'un capteur optique 1.

Un dispositif de projection 2 de fluide de nettoyage selon l'invention est disposé au voisinage d'un capteur/émetteur optique 1 et de sa surface vitrée à nettoyer. Il comporte notamment une électrovanne 3 et un organe de projection 8, le dispositif de projection étant configuré selon l'invention en ce que l'organe est directement fixé sur l'électrovanne, notamment par des moyens de fixation réversibles de type encliquetage à déformation élastique, sans qu'un conduit flexible soit agencé entre l'électrovanne et l'organe de projection. Dans la description qui va suivre, plusieurs dispositifs de projection vont être décrits avec des électrovannes et des organes de projection réalisés selon plusieurs modes de réalisation.

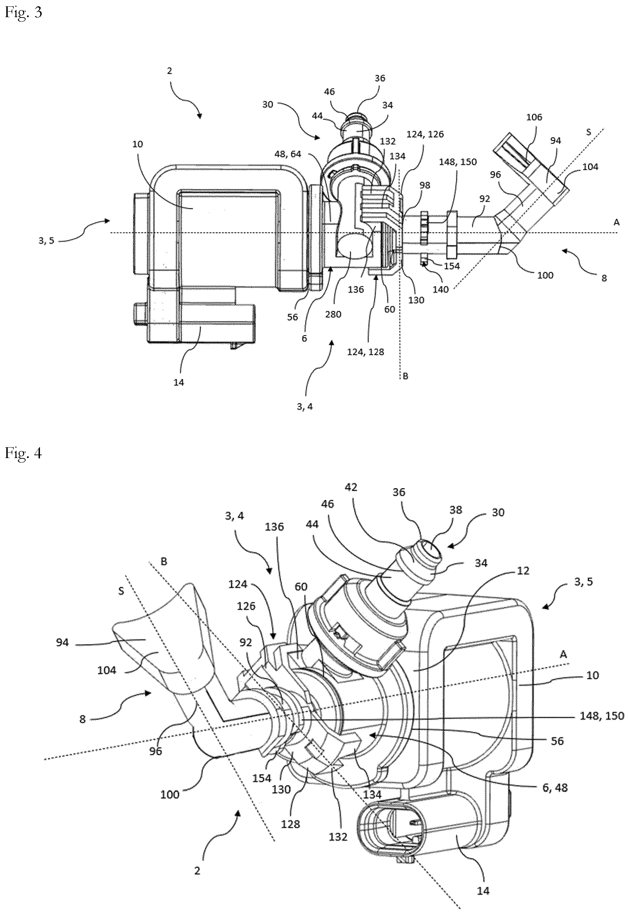

On va dans un premier temps se référer aux figures 3 à 6, illustrant dans son ensemble un dispositif de projection selon un premier mode de réalisation.

L'électrovanne 3 comprend un système hydraulique 4, configuré pour permettre la circulation de façon étanche du fluide de nettoyage depuis le flexible d'alimentation F vers l'organe de projection 8 et donc vers la surface vitrée du capteur associé, et un système électromagnétique 5, configuré pour recevoir et traiter les instructions reçues d'une électronique de commande et influencer en conséquence la circulation du fluide de nettoyage dans le système hydraulique 4.

Le système hydraulique 4 comprend ici un organe de distribution 6 solidaire du système électromagnétique 5 et relié directement, selon l'invention, à l'organe de projection 8 directement fixé sur l'organe de distribution 6. Tel que cela a pu être précisé précédemment, on comprend que l'organe de projection 8 est en contact direct avec l'organe de distribution 6, c'est-à-dire qu'aucun élément ne s'interpose entre ces deux objets.

Le système électromagnétique 5 comprend un boîtier 10 configuré pour loger différents composants électroniques et sur une première face 12 duquel débouche des moyens coopérant avec l'organe de distribution 6. Selon un exemple non limitatif de l'invention, le boîtier 10 présente ici sensiblement la forme d'un parallélépipède rectangle et présente ainsi une pluralité de faces, parmi lesquelles ladite première face 12. Le boîtier 10 comprend par ailleurs une borne de raccordement électrique 14 permettant le raccordement du système électromagnétique, et plus particulièrement des composants logés dans le boîtier 10, à l'unité électronique de commande.

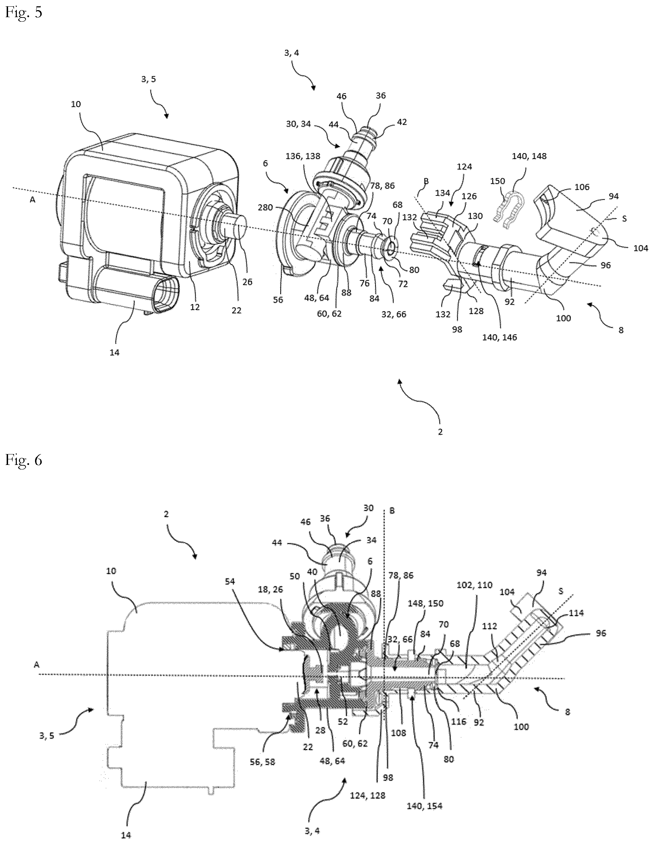

Le système électromagnétique comporte, logés dans le boîtier 10, des composants électromagnétiques, qui permettent le déplacement le long d'une direction longitudinale A d'un dispositif de blocage 18 apte à prendre une position de dégagement, visible sur la figure 6, dans laquelle la circulation de fluide de nettoyage dans le système hydraulique 4 est permise et une position de blocage, dans laquelle le dispositif de blocage 18 empêche la circulation de fluide entre le système hydraulique et l'organe de projection. Tel qu'illustré sur la vue en coupe partielle de la figure 6, le système électromagnétique est ici configuré de sorte que le dispositif de blocage 18 comporte un piston 22 dont une extrémité longitudinale 26 libre se positionne en partie à l'extérieur du boîtier 10, dans l'organe de distribution du système hydraulique 4, le piston 22 étant apte à traverser la première face 12 du boîtier 10. Dans la position de dégagement, l'extrémité longitudinale 26 libre du piston est ramené vers la première face 12, en dégageant de la place pour le passage de fluide de nettoyage à l'intérieur de l'organe de distribution 6. Lorsque l'alimentation électrique des composants électromagnétiques est coupée, des moyens de rappel tendent à ramener le piston 22 et le dispositif de blocage 18 dans sa position de blocage apte à empêcher le passage de fluide à l'intérieur de l'organe de distribution.

Tel que cela a été précisé auparavant, le système hydraulique 4 comprend l'organe de distribution 6 en contact avec le système électromagnétique 5. L'ensemble des éléments composant le système hydraulique 4 assure une étanchéité du fluide de nettoyage circulant à travers ce système.

L'organe de distribution 6 consiste en un corps rigide, pas ou peu déformable élastiquement de sorte qu'il garde sa forme générale d'origine en cours de fonctionnement du dispositif.

L'organe de distribution 6 comporte une chambre de circulation 28 ménagée pour le passage de fluide de nettoyage, la chambre de circulation communiquant avec d'une part un embout d'entrée de fluide 30 et d'autre part un embout de sortie de fluide 32. Tel que cela est notamment visible sur la figure 5, l'embout d'entrée de fluide 30 forme une saillie d'une face latérale de l'organe de distribution 6 et l'embout de sortie de fluide 32 forme une saillie d'une face frontale de l'organe de distribution 6, à l'opposé du système électromagnétique 5.

La chambre de circulation 28 est agencée dans le prolongement direct de la première face 12 du boîtier 10, de sorte que l'extrémité longitudinale 26 libre du piston 22 du système électromagnétique 5 précédemment évoquée est apte à s'étendre dans la chambre de circulation 28 de sorte à pouvoir bloquer ou non la circulation d'un fluide de nettoyage dans cette chambre de circulation 28. Tel que cela a été évoqué précédemment, le piston 22 du système électromagnétique 5 est représenté sur la figure 6 dans une position de dégagement, c'est-à-dire une position dans laquelle le fluide de nettoyage peut circuler depuis l'embout d'entrée de fluide 30 jusqu'à l'embout de sortie de fluide 32 à travers la chambre de circulation 28. Et on comprend que dans la position de blocage du piston 22, l'extrémité longitudinale 26 libre de ce dernier est agencée pour boucher l'embout de sortie de fluide 32 de l'organe de distribution 6.

L'entrée de fluide 30 de l'organe de distribution 6 est configurée pour être rattachée, via un conduit flexible à un réservoir de stockage de fluide ou à un circuit de distribution hydraulique commun à tous les dispositifs de projection de fluide de nettoyage du véhicule, tel qu'évoqué en référence aux figures 1 et 2. De la sorte, le fluide de nettoyage est présent de façon continue au niveau de l'embout d'entrée de fluide 30 et de la chambre de circulation 28, et selon la configuration du système électromagnétique 5 et comme précisé ci-dessus, le fluide de nettoyage circule ensuite vers l'embout de sortie de fluide 32 ou est bloqué au niveau de la chambre de circulation 28 de l'organe de distribution 6.

Comme plus particulièrement visible sur les figures 4 et 5, l'embout d'entrée de fluide 30 prend globalement la forme d'un manchon 34 cylindrique à sections variables. On entend par sections variables que le manchon 34 se compose de différentes portions présentant chacune un diamètre externe différent. Plus particulièrement, le manchon 34 comprend, au niveau d'un bord libre 36 du manchon 34, à l'opposé de la chambre de circulation 28, un orifice d'entrée 38 permettant l'arrivé de fluide de nettoyage destiné à déboucher dans la chambre de circulation 28 via un conduit de circulation 40 formé à l'intérieur du manchon 34.

Le manchon 34 est configuré pour permettre le raccordement étanche d'un conduit flexible pour permettre l'arrivée de fluide de nettoyage et présente notamment une portion chanfreinée 42, formant une rampe élargissant le manchon depuis le bord libre 36, une portion intermédiaire 44 et une portion de raccordement à un cylindre 280 débouchant sur la chambre de circulation 28. Le conduit flexible est emmanché autour de la portion chanfreinée 42, dont la forme de rampe permet de faciliter l'emmanchement, puis au moins autour de la portion intermédiaire 44, et une portion de butée 46 formée à la jonction entre la portion chanfreinée 42 et la portion intermédiaire 44 permet de retenir en positon le conduit flexible.

La chambre de circulation 28 est délimitée dans l'organe de distribution 6 par une enveloppe 48 fermée et comportant trois ouvertures, parmi lesquelles une première ouverture 50 formée dans le cylindre 280 et communiquant avec l'embout d'entrée de fluide 30, une deuxième ouverture 52 communiquant avec l'embout de sortie de fluide 32 et une troisième ouverture 54, disposée en regard de la première face 12 du boîtier 10 précédemment évoqué et dimensionnée pour qu'au moins une partie du piston du système électromagnétique 5 puisse s'étendre dans la chambre de circulation 28.

Tel qu'illustré, la troisième ouverture 54 et la deuxième ouverture 52 sont alignées selon la direction longitudinale A, en étant ménagée de part et d'autre de la chambre de circulation 28. De la sorte, le mouvement de déplacement longitudinal du piston permet d'amener l'extrémité longitudinale 26 libre de ce piston contre la deuxième ouverture 52, ou à distance de celle-ci et ainsi bloquer ou autoriser la circulation de fluide de nettoyage entre la chambre de circulation 28 et l'embout de sortie de fluide 32.

L'enveloppe 48 s'étend globalement sous la forme d'un élément cylindrique centré sur un axe parallèle à la direction longitudinale A, et en travers duquel s'étend le cylindre 280 configuré pour communiquer avec l'embout d'entrée de fluide 30. En d'autres termes, dans l'exemple illustré, l'embout d'entrée de fluide s'étend transversalement au reste de l'électrovanne qui s'étend essentiellement le long de la direction longitudinale.

L'enveloppe 48 présente un premier bord d'extrémité longitudinale 56 configuré pour être en contact avec le système électromagnétique 5, ce premier bord 56 délimitant une première face 58 sensiblement discoïde au niveau de laquelle se trouve la troisième ouverture 54 de l'enveloppe 48. L'enveloppe 48 présente un deuxième bord d'extrémité longitudinale 60 opposé au premier bord 56 selon la direction longitudinale A et délimitant une deuxième face 62 sensiblement discoïde et en saillie de laquelle s'étend l'embout de sortie de fluide 32. L'enveloppe 48 présente ainsi une paroi périphérique 64 sensiblement cylindrique reliant les premier et deuxième bords 56, 60 de l'enveloppe 48 et qui est prolongé transversalement par le cylindre 280 permettant de communiquer avec l'embout d'entrée de fluide tel qu'évoqué précédemment.

L'embout de sortie de fluide 32 présente une forme sensiblement équivalente à celle de l'embout d'entrée de fluide 30 précédemment décrit, avec un manchon 66 formant saillie de la deuxième face 62 de l'enveloppe 48 et configuré pour coopérer avec l'organe de projection 8. Le manchon 66 s'étend longitudinalement en présentant une extrémité longitudinale libre 68 et en étant traversé longitudinalement par un conduit de sortie de fluide 70 débouchant d'une part dans la chambre de circulation 28 et d'autre part au niveau de l'extrémité libre 68 du manchon 66. Tel qu'illustré sur la figure 6, le conduit de sortie de fluide 70 peut présenter un diamètre interne sensiblement constant.

Là encore, comme pour l'embout d'entrée de fluide, le manchon 66 se subdivise en plusieurs portions parmi lesquelles, successivement depuis l'extrémité libre 68 jusqu'à l'enveloppe 48, une première portion d'extrémité 72, une portion chanfreinée 74, une portion intermédiaire 76 et une deuxième portion d'extrémité 78.

La première portion d'extrémité 72 comprend un anneau souple 80 formant élément d'étanchéité à la jonction avec l'organe de projection, lorsque le manchon 66 est emmanché dans un orifice correspondant de l'organe de projection.

La portion chanfreinée 74 forme une rampe facilitant l'emmanchement de l'embout de sortie de fluide ave l'organe de projection, et comme pour l'embout d'entrée de fluide, cette portion chanfreinée participe à définir, à sa jonction avec la portion intermédiaire 76 une butée 84 s'étendant radialement par rapport au manchon 66 et participant à bloquer en position longitudinale l'organe de projection 8 par rapport à l'électrovanne 3 une fois celui-ci monté sur l'embout de sortie de fluide 32.

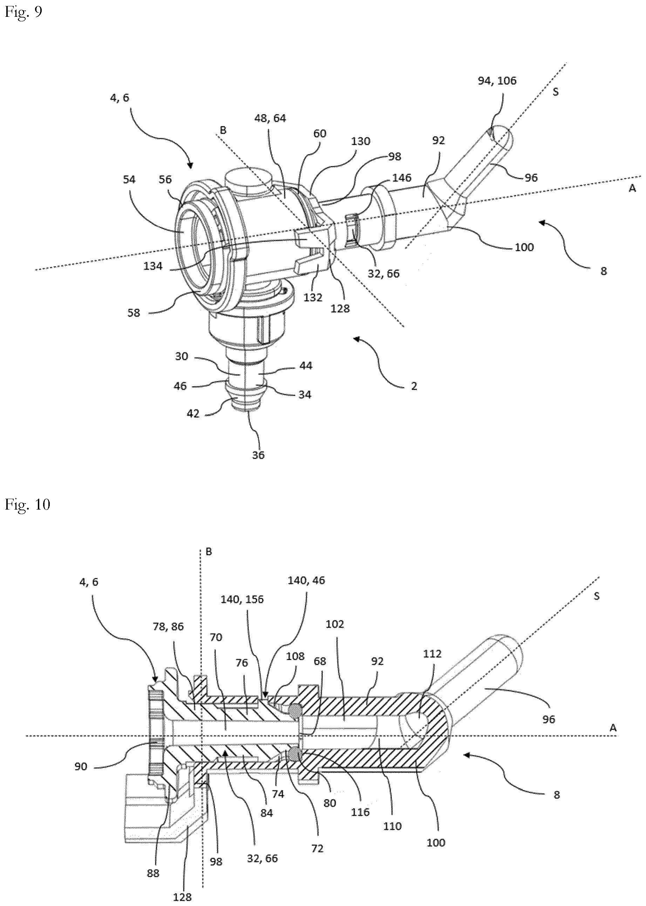

La deuxième portion d'extrémité 78 présente notamment une portion cylindrique 86, agencée dans la continuité de la portion intermédiaire 76, et une platine 88, de diamètre plus important que la portion cylindrique et formant une embase apte à être plaquée contre le deuxième face 62 de l'organe de distribution 6 et formant support à des moyens de fixation complémentaires 90, par exemple un filetage tel que visible par exemple sur la figure 10 illustrant un autre mode de réalisation, permettant d'assurer la fixation du manchon 66 de l'embout de sortie de fluide sur l'enveloppe 48 de l'organe de distribution 6.

Comme précisé ci-dessus, l'embout de sortie de fluide 32, et plus généralement l'organe de distribution 6, est destiné à coopérer avec l'organe de projection 8, ce dernier se fixant directement sur l'organe 6 de l'électrovanne 3.

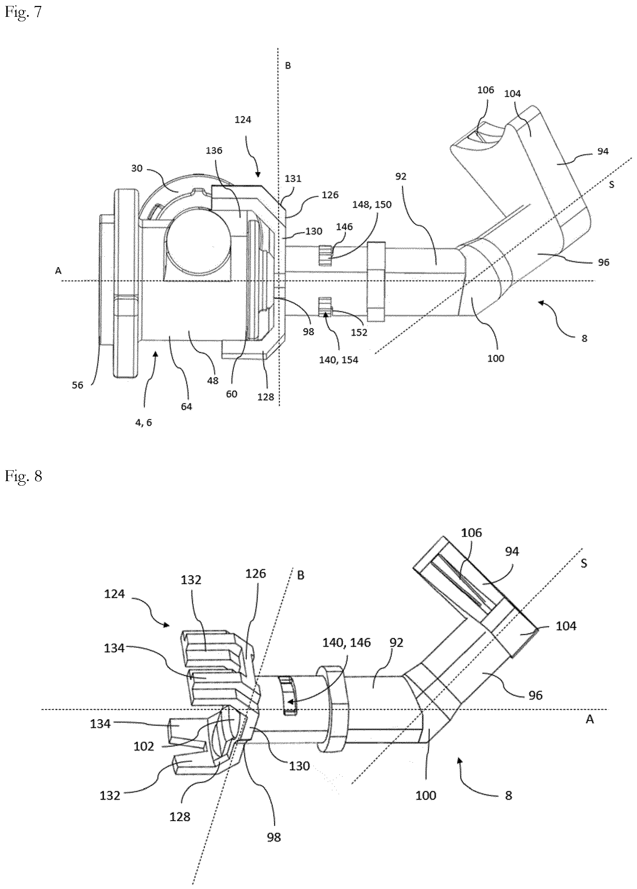

On va maintenant décrire plus en détails, et notamment en référence aux figures 7 et 8, l'organe de projection 8 selon le premier mode de réalisation de l'invention, en décrivant des moyens de coopération entre l'organe 6 et l'organe de projection 8.

L'organe de projection 8 comprend au moins un tube de raccordement 92 et une buse de projection 94, ainsi qu'un corps de distribution 96 configuré pour relier fluidiquement le tube de raccordement 92 à la buse de projection 94.

Le tube de raccordement 92 forme la partie de l'organe de projection directement fixée sur le manchon 66 de l'embout de sortie de fluide 32. Plus particulièrement, le tube de raccordement 92 s'étend essentiellement le long de la direction longitudinale A entre une première extrémité longitudinale 98 en regard de l'organe de distribution 6 et une deuxième extrémité longitudinale 100 tournée à l'opposé de l'organe de distribution 6 et solidaire du corps de distribution 96.

Le corps de distribution 96 présente la forme d'un tube creux qui a pour fonction d'alimenter la buse de projection en fluide de nettoyage après que celui-ci soit passé par le tube de raccordement 92. Tel qu'illustré, le corps de distribution se distingue du tube de raccordement par son orientation générale, le long d'une direction S sécante à la direction longitudinale A. Cette orientation du corps de distribution 96, formant un angle avec la direction longitudinale A, permet d'orienter la buse de projection 94 pour que le fluide de nettoyage soit projeté de façon optimale sur la surface à nettoyer, à savoir ici la surface optique d'un capteur/émetteur. On comprend que la présence de ce corps de distribution et son orientation inclinée par rapport à la direction longitudinale pourrait ne pas être nécessaire si la buse de projection 94 peut être agencée directement dans le prolongement du tube de raccordement 92.

Comme plus particulièrement illustré sur la figure 6, le tube de raccordement 92, le corps de distribution 96 et la buse de projection 94 sont évidés de manière à former un conduit d'acheminement 102 à l'intérieur de l'organe de projection 8 qui permet l'acheminement du fluide depuis l'organe de distribution 6 jusqu'à la buse de projection 94. La buse de projection comportant ici une tête de projection 104 présentant un orifice de projection 106, le conduit d'acheminement 102 s'étend alors jusqu'à l'orifice de projection 106.

Le conduit d'acheminement 102 est délimité par une paroi de chacun des composants de l'organe de projection 8, chaque paroi présentant une dimension interne, ici un diamètre interne lorsque le conduit d'acheminement est globalement cylindrique, différente de l'une à l'autre et délimitant de la sorte différents segments du conduit d'acheminement 102. Depuis la première extrémité longitudinale 98 du tube de raccordement 92 jusqu'à l'orifice de projection 106 de la buse de projection 94, on peut distinguer de la sorte dans le conduit d'acheminement 102 les segments suivants : un segment de coopération 108 avec l'embout de sortie de fluide 32, un segment de raccordement 110, un segment de distribution 112 et un segment de projection 114.

Le segment de coopération 108 du tube de raccordement 92 est délimité par une paroi dont le diamètre interne est sensiblement égal au diamètre externe du manchon 66 mesuré par exemple au niveau de la butée 84. De la sorte, on peut réaliser un montage serré de l'organe de projection 8 autour de l'embout de sortie 32 de l'organe de distribution 6. De plus, la longueur du segment de coopération 108 est sensiblement équivalente à une longueur du manchon 66, de sorte que l'extrémité libre du manchon 66 soit positionnée sensiblement au niveau d'un épaulement 116 formant jonction entre le segment de coopération 108 et le segment de raccordement 110.

Le segment de raccordement 110, également formé au niveau du tube de raccordement 92, est délimité par une paroi présentant un diamètre interne réduit comparativement au diamètre interne participant à définir le segment de coopération 108, et cette réduction de diamètre génère de la sorte l'épaulement 116 précédemment évoqué. Tel que cela est visible de la figure 6, le diamètre du segment de raccordement 110 est sensiblement le même que celui du conduit de sortie de fluide 70, de sorte que le fluide peut s'écouler de façon continue et à pression constante entre l'organe de distribution 6 et cette partie de l'organe de projection 8.

Le segment de distribution 112 prolonge le conduit d'acheminement 102 depuis le segment de raccordement 110 jusqu'à la buse de projection 94 à travers le corps de distribution 96. Le segment de distribution 112 est délimité par une paroi dont le diamètre interne va en diminuant au fur et à mesure de son éloignement du segment de raccordement 110, formant ainsi un profil d'entonnoir au fur et à mesure du rapprochement de l'orifice de projection 106. On vise ainsi à accélérer pression ou débit du fluide de nettoyage à proximité de l'orifice de projection, afin de projeter un fluide de nettoyage susceptible de décaper la surface optique du capteur associé des salissures qui la recouvrent.

Le segment de projection 114, présent au niveau de la buse de projection 94, présente une section plus petite que les sections des autres segments du conduit d'acheminement 102, en assurant la liaison entre le segment de distribution 112 et l'orifice de projection 106. Là encore, on vise à accélérer le fluide de nettoyage en sortie de l'organe de projection.

Pour monter l'organe de projection 8 sur l'organe de distribution 6, le tube de raccordement 92 est coulissé autour du manchon 66 le long de la direction longitudinale A, jusqu'à ce que l'extrémité libre 68 du manchon 66, et notamment l'anneau souple 80 agencé à cette extrémité libre 68, entre en contact avec l'épaulement 116 délimitant la jonction entre segment de coopération 108 et segment de raccordement 110.

Une fois que l'organe de projection 8 est monté sur l'organe de distribution 6 de l'électrovanne 3, le fluide de nettoyage peut circuler depuis l'embout d'entrée de fluide 30 de l'organe de distribution 6 jusqu'à l'orifice de projection 106, si l'électrovanne est dans une configuration permettant le passage de fluide en direction de l'organe de projection. Dans ce cas, le fluide de nettoyage circule successivement depuis l'embout d'entrée de fluide 30 à travers la chambre de circulation 28, puis à travers l'embout de sortie de fluide 32, puis enfin, en passant dans l'organe de projection 8, à travers le segment de raccordement 110, le segment de distribution 112, le segment de projection 114 puis l'orifice de projection 106 tels qu'ils viennent d'être décrits.

L'anneau souple 80, par son contact avec l'épaulement lorsque l'organe de projection est emmanché autour de l'embout de sortie de fluide, participe à l'étanchéité du dispositif de projection au niveau du segment de coopération 108, assurant que l'intégralité du fluide de nettoyage s'écoulant à travers l'embout de sortie 32 passe en direction du corps de distribution 96 et de la buse de projection 94. Tel que cela a été précisé précédemment, la diminution du diamètre interne délimitant ces différents segments permet d'augmenter la vitesse de circulation du fluide de nettoyage à travers le conduit d'acheminement 102 jusqu'à ce que ce fluide atteigne une vitesse nécessaire à sa projection sur une surface optique pour assurer son nettoyage.

On va maintenant décrire plus en détail des moyens de coopération entre l'organe de distribution 6 et l'organe de projection 8, notamment en référence aux figures 5 à 8, et qui consistent d'une part en des moyens de fixation permettant une fixation directe de l'organe de projection sur l'électrovanne et d'autre part en des moyens de détrompage permettant d'assurer un sens de montage approprié.

Le dispositif de projection selon l'invention comprend au moins un dispositif de détrompage 124 du montage de l'organe de projection 8 sur l'électrovanne 3, afin de s'assurer de l'orientation correcte de la buse de projection 94 en regard de la surface optique à nettoyer.

Sur l'organe de projection 8, le dispositif de détrompage 124 prend ici la forme d'une première patte de positionnement 126 et d'une deuxième patte de positionnement 128, chacune formant saillie du tube de raccordement 92 au niveau de sa première extrémité longitudinale 98 de manière à venir en recouvrement de l'organe de distribution 6 lorsque l'organe de projection 8 est fixé sur ce dernier.

Dans l'exemple illustré, les pattes de positionnement formant le dispositif de détrompage sont disposées sur le bord délimitant la première extrémité longitudinale 98 en étant diamétralement opposées l'une à l'autre.

Chacune des pattes de positionnement 126, 128 comprend une paroi de base 130 prolongeant le tube de raccordement en s'étendant le long d'une direction transversale B, sensiblement perpendiculaire à la direction longitudinale A le long duquel s'étend principalement le tube de raccordement 92. A l'extrémité de cette paroi de base, chaque patte de positionnement comporte au moins un premier doigt 132 prolongeant perpendiculairement la paroi de base 130 en s'étendant le long d'une direction sensiblement parallèle à la direction longitudinale A, en direction de l'organe de distribution 6, c'est-à-dire à l'opposé de l'organe de projection 8. La paroi de base 130 de chacune des pattes de positionnement 126, 128 peut être prolongée par un deuxième doigt 134 qui s'étend à côté du premier doigt 132, sensiblement parallèlement à la direction longitudinale A.

Dans l'exemple illustré, et tel que cela est notamment visible sur la figure 7, une paroi intermédiaire 131 est formée entre la paroi de base 130 et les doigts 132, 134 qui la prolongent, afin d'accorder une souplesse de fléchissement aux doigts 132, 134. Cette paroi intermédiaire 131 présente une orientation inclinée par rapport aux orientations respectives de la paroi de base et des doigts, de sorte que la paroi intermédiaire 131 forme une zone de chanfrein de la patte de positionnement correspondante.

Sur l'organe de projection, le dispositif de détrompage 124 est formé par une différence structurelle entre la première patte de positionnement 126 et la deuxième patte de positionnement 128. Tel qu'illustré sur les figures 7 et 8, la paroi de base 130 et/ou la paroi intermédiaire 131 de la première patte de positionnement 126 présente une dimension transversale, mesurée le long de la direction transversale B, qui est plus grande que la dimension transversale correspondante de la paroi de base 130 et/ou de la paroi intermédiaire 131 de la deuxième patte de positionnement 128. De la sorte, si l'on définit un axe d'allongement de l'organe de projection comme étant l'axe sur lequel le tube de raccordement est centré, les pattes de positionnement diffèrent en ce que les doigts 132, 134 de la première patte de positionnement 126 s'étendent longitudinalement à une distance de l'axe d'allongement de l'organe de projection plus grande que la distance correspondante à laquelle s'étendent les doigts de la deuxième patte de positionnement 128.

Cette différence structurelle permet de s'assurer que l'organe de projection est dans le bon sens, c'est-à-dire avec la buse de projection correctement orientée pour projeter du fluide sur la surface optique à nettoyer, au moment de la fixation directe de l'organe de projection 8 sur l'électrovanne 3.

Tel que cela est notamment visible sur les figures 5 et 7, l'enveloppe 48 de l'organe de distribution comporte sur sa paroi périphérique 64 un muret 136 qui forme une excroissance locale du deuxième bord d'extrémité longitudinale 60 et qui est solidaire du cylindre 280. Le muret 136 est un bloc parallélépipédique formant saillie de l'enveloppe 48 le long de la direction transversale B et dont une face plate 138 s'étend à l'opposé de l'enveloppe. Le muret 136 formant une excroissance locale, la dimension transversale de l'enveloppe 48 au niveau de ce muret 136 est plus grande que la dimension correspondante de l'enveloppe 48 au niveau d'un point diamétralement opposé. Cette différence de dimension transversale implique que seuls les doigts 132, 134 de la première patte de positionnement 126 peuvent se positionner contre la face plate 138 du muret 136 lorsque l'organe de projection 8 est monté sur l'électrovanne, la différence entre la dimension transversale de la première patte de positionnement 126 et la dimension transversale de la deuxième patte de positionnement 128 étant sensiblement égale à la dimension transversale du muret 136. Les doigts de la deuxième patte de positionnement 128 sont alors en contact avec l'enveloppe 48 dans une zone diamétralement opposée au muret 136.

On comprend que si l'organe de projection était monté à l'envers, c'est-à-dire avec la deuxième patte de positionnement 128 angulairement positionnée au niveau du muret 136, les doigts de cette deuxième patte de positionnement 128 entreraient en contact avec ce muret et empêcheraient l'insertion de l'organe de projection 8 suffisamment proche de l'organe de distribution 6 pour permettre sa fixation. La présence du muret 136 sur l'électrovanne et les formes et dimensions différentes des pattes de positionnement 126, 128 de l'organe de projection forment ainsi le dispositif de détrompage 124 de montage de l'organe de projection 8 sur l'organe de distribution 6.

Dans des modes de réalisation alternatifs, ici non représentés, le dispositif de détrompage 124 pourrait comprendre une nervure formant saillie locale du tube de raccordement 92 et dimensionnée pour coopérer avec une saignée réalisée localement le long d'une face externe du manchon 66 ou pourrait comprendre un doigt émergeant de l'enveloppe 48 de l'organe de distribution 6 coopérant avec une rainure formée dans une face interne du tube de raccordement 92, sans pour autant sortir du cadre de l'invention.

Tel que cela a été évoqué précédemment, le dispositif de projection selon l'invention comporte des moyens de fixation permettant la fixation directe, c'est-à-dire sans conduit flexible intermédiaire, de l'organe de projection sur l'électrovanne et notamment du tube de raccordement rigide 92 sur l'organe rigide de distribution 6.

Selon le premier mode de réalisation de l'invention, le dispositif de projection comprend des moyens de fixation réversible 140 permettant la fixation directe de l'organe de projection sur le manchon 66 formant l'embout de sortie de fluide 32. On comprend que ces moyens de fixation réversible 140 permettent de pouvoir fixer directement l'organe de projection 8 sur l'électrovanne, tout en autorisant le démontage ultérieur de l'organe de projection 8 sans entraîner la casse de l'organe de projection 8 ou de l'organe de distribution 6.

Ces moyens de fixation réversible 140 comportent ici une pièce additionnelle formant un élément de blocage 148 et qui est assemblé une fois l'organe de projection 8 monté sur l'embout de sortie de l'organe de distribution 6. L'élément de blocage consiste ici en un anneau élastique de serrage, ou circlip, qui vient être rapporté dans une ouverture réalisée dans l'organe de projection 8 pour bloquer la position longitudinale de l'embout de sortie à l'intérieur de l'organe de projection.

Plus particulièrement, et tel qu'illustré sur les figures 5 et 6, le tube de raccordement 92 de l'organe de projection 8 comporte au moins une première trouée 146, qui s'étend circonférentiellement sur la paroi du tube de raccordement et qui est configurée pour traverser la paroi du tube de raccordement et relier le conduit d'acheminement 102, et plus particulièrement le segment de coopération 108 de ce conduit d'acheminement, au milieu extérieur à travers la paroi du tube de raccordement. La première trouée 146 présente une dimension longitudinale sensiblement égale à celle de l'élément de blocage 148, et elle s'étend partiellement autour du tube de raccordement 92.

La première trouée est formée à une distance de la première extrémité longitudinale 98 telle que la longueur entre la première trouée 146 et l'épaulement 116 formant la jonction entre le segment de coopération 108 et le segment de raccordement 110 à l'intérieur du tube de raccordement 92 est au moins égale voire supérieure à la longueur du manchon 66 mesurée entre l'extrémité libre 68 et la butée 84 agencée à la jonction entre la portion intermédiaire 76 de la portion chanfreinée 74.

Ces dimensions longitudinales sont prévues de telle sorte que, lorsque le manchon 66 est inséré dans l'organe de projection, la butée 84 soit disposée à la limite de la première trouée, entre celle-ci et l'épaulement 116.

Tel qu'évoqué précédemment, l'élément de blocage 148 est un circlip, ici en forme de U dont une première branche 150 est apte à être logé dans la première trouée 146 du tube de raccordement 92. Cette première branche150 du circlip est alors en contact avec la portion intermédiaire 76 du manchon 66, et forme avec la butée 84 des moyens empêchant le déplacement longitudinal du manchon 66 à l'intérieur de l'organe de projection 8.

Dans l'exemple illustré, le tube de raccordement 92 comprend une deuxième trouée 152 diamétralement opposé à la première trouée 146 et une deuxième branche 154 du circlip est alors logée à travers la deuxième trouée 152 dans le segment de coopération 108 du tube de raccordement 92 de façon symétrique au logement de la première branche 150 dans la première trouée 146, la deuxième branche 154 étant également en contact avec la portion intermédiaire 76 du manchon 66 et participant au blocage longitudinal du manchon via la butée 84 de ce dernier.

Les première et deuxième branches 150, 154 du circlip sont écartés l'un de l'autre, dans une forme d'origine du circlip telle que visible sur la figure 5, d'une distance inférieure à celle du diamètre du tube de raccordement, de sorte que les branches sont déformées en éloignement l'un de l'autre lorsque le circlip est agencé en travers du tube de raccordement. Une fois chaque branche en regard de la trouée correspondant, l'effet de rappel élastique du circlip tend à engager chaque branche dans la trouée de sorte à permettre le maintien en position l'organe de projection 8 sur le manchon 66 en bloquant la portion chanfreinée 74 et la première portion d'extrémité 72 du manchon 66 entre les branches 150, 154 du circlip et l'épaulement 116 du tube de raccordement 92. Les vibrations du dispositif de projection 2 lors du fonctionnement de ce dernier ou du roulage du véhicule sont insuffisantes pour écarter les branches l'une de l'autre de sorte que la fixation directe entre l'organe de projection et l'électrovanne est fiable, et un démontage de l'ensemble est rendu possible par une action d'un utilisateur qui peut écarter l'une de l'autre les branches du circlip pour désengager si nécessaire l'organe de projection 8 de l'électrovanne.

On va maintenant décrire, en référence aux figures 9 et 10, un deuxième mode de réalisation du dispositif de projection de fluide de nettoyage de l'invention, qui diffère notamment de ce qui précède dans la forme de la buse de projection 94 et dans la réalisation des moyens de fixation réversible 140 permettant la fixation directe de l'organe de projection 8 sur le manchon 66 formant l'embout de sortie de fluide 32. De la sorte, dans les figures 9 et 10, seuls l'organe de projection 8 et l'organe de distribution 6 sont illustrés, le système électromagnétique 5 de l'électrovanne 3 pouvant être utilisé à l'identique de ce qui a été précédemment décrit.

La buse de projection 94 présente ici une forme simplifiée et consiste ici uniquement en l'orifice de projection 106.

Les moyens de fixation réversible 140 présente comme précédemment une première trouée 146 formée dans le tube de raccordement 92, tel que décrit ci-dessus dans le premier mode de réalisation. Cette trouée 146 est configurée pour recevoir un élément déformable élastiquement, conformément au premier mode de réalisation dans lequel cet élément déformable élastiquement était formé par le circlip.

Ici, l'élément déformable élastiquement apte à coopérer avec l'au moins une trouée est formé par l'extrémité libre du manchon 66 de l'embout de sortie de fluide, qui est apte à se déformer entre sa forme d'origine et une forme rétractée où le diamètre interne du conduit de sortie de fluide 70 est diminué. L'élément déformable élastiquement comporte également un doigt d'encliquetage 156, agencé à la jonction de la portion chanfreinée 74 et de la portion intermédiaire 76, sur une dimension longitudinale sensiblement égale à la dimension longitudinale correspondante de la première trouée 146. Ce doigt d'encliquetage 156 forme une saillie radiale du manchon de l'embout de sortie de fluide qui est apte à venir se loger dans la première trouée 146 lorsque l'embout de sortie de fluide est inséré jusqu'à l'épaulement 116 à l'intérieur de l'organe de projection 8. Le doigt d'encliquetage 156 forme une saillie radiale du manchon en ce qu'il s'étend à une distance de l'axe longitudinal A sur lequel est centré le manchon 66 qui est plus grande que n'importe quelle autre partie du manchon destinée à être insérée dans l'organe de projection 8.

Tel que cela est visible, la première extrémité longitudinale 98 du tube de raccordement 92 présente un bord chanfreiné permettant de faciliter l'insertion du doigt d'encliquetage 156 à l'intérieur de ce tube de raccordement 92 de l'organe de projection en initiant la déformation élastique de l'extrémité libre du manchon. Il convient de noter qu'une déformation élastique inverse du tube de raccordement peut avoir lieu, à savoir un écartement de ce tube de raccordement pour laisser passage au doigt d'encliquetage. Une fois l'organe de projection 8 suffisamment emmanché autour de l'embout de sortie de fluide 32 pour que le doigt d'encliquetage 156 soit en regard de la première trouée 146, l'effet de rappel élastique, aussi bien celui du manchon 66 que celui du tube de raccordement, tend à ramener les composants dans leur forme d'origine et le doigt d'encliquetage 156 se loge dans la première trouée 146 du tube de raccordement 92.

Une fois le doigt d'encliquetage 156 logé dans la première trouée 146 du tube de raccordement 92, l'organe de projection 8 est maintenu en position autour du manchon 66, bloquant tout mouvement de l'organe de projection 8 le long de la direction longitudinale A.

Ce moyen de fixation de l'organe de projection 8 sur l'organe de distribution 6 est également qualifié de réversible car l'utilisateur peut démonter l'organe de projection 8 de l'organe de distribution 6 sans entraîner la casse de l'un des objets. Si l'utilisateur souhaite démonter l'organe de projection 8 de l'organe de distribution 6, il peut exercer une pression sur le doigt d'encliquetage 156 pour le déloger de la première trouée 146 et simultanément tirer longitudinalement sur l'organe de projection 8 pour l'éloigner de l'électrovanne.

On comprend que cette fixation par encliquetage pourrait être mise en œuvre de façon équivalente avec deux trouées en opposition l'une de l'autre tel que décrit dans le premier mode de réalisation, et avec deux doigts d'encliquetage.

Dans ce dernier cas, il convient que le dispositif de projection soit équipé d'un dispositif de détrompage 124, qui peut prendre la même forme que dans le premier mode de réalisation. On pourrait également prévoir de se passer du dispositif de détrompage sous la forme des pattes de positionnement telles que précédemment décrites si un seul doigt d'encliquetage et une seule trouée sont prévus, puisque la position angulaire de la buse de projection 94 sera forcément correcte dès lors que le doigt d'encliquetage et la trouée unique coopèrent. Toutefois, même dans ce cas, un dispositif de détrompage peut être un moyen supplémentaire de s'assurer que doigt d'encliquetage et trouée sont alignés et coopèrent bien ensemble lorsque l'organe de projection est emmanché à fond sur l'embout de sortie de fluide de l'électrovanne.

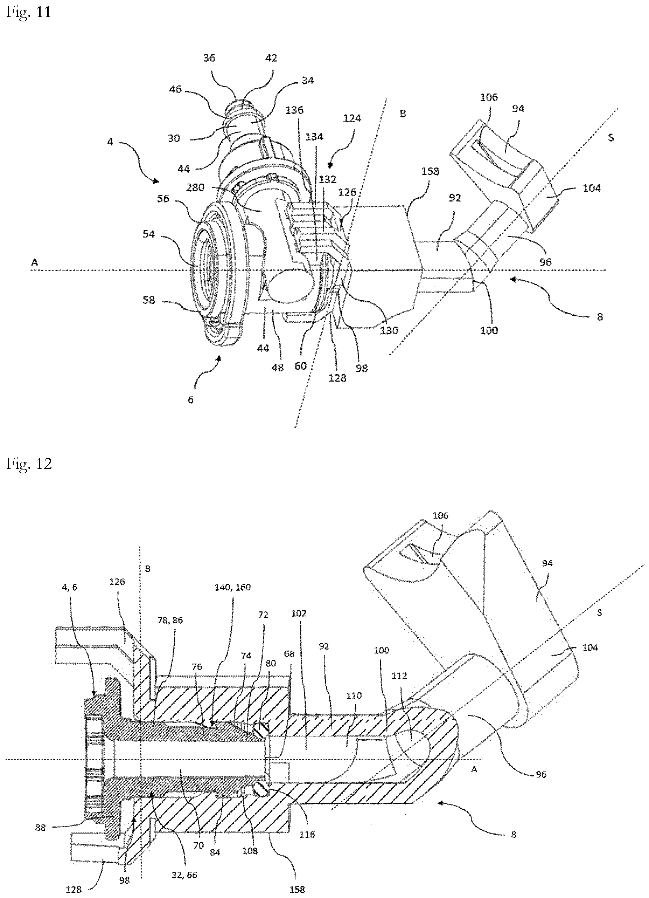

On va maintenant décrire un troisième mode de réalisation en référence aux figures 11 et 12 qui diffère du premier mode de réalisation dans la forme des moyens de fixation réversible 140.

L'organe de projection 8 comporte un bloc parallélépipédique 158 entourant en partie le tube de raccordement 92 depuis les pattes de positionnement 126, 128 vers le corps de distribution 96. La forme du bloc parallélépipédique n'est ici qu'illustrative et non limitative de l'invention, étant entendu que ce bloc a principalement pour fonction d'augmenter localement l'épaisseur du tube de raccordement pour pouvoir intégrer, dans la face interne de sa paroi délimitant le segment de coopération 108 du conduit d'acheminement 102, une excroissance formant doigt d'encliquetage.

Plus particulièrement, et tel que cela est visible de la figure 12, le tube de raccordement, au niveau de ce bloc 158, comporte au moins une excroissance 160 formant saillie radiale en travers du segment de coopération 108 du conduit d'acheminement 102. L'excroissance 160 peut notamment s'étendre sur toute la périphérie de la paroi délimitant ce segment de coopération 108 du conduit d'acheminement. L'excroissance 160 présente une première face formant rampe tournée vers la première extrémité 98 du manchon 66 et une deuxième face droite, tournée à l'opposé et susceptible de former une face de butée longitudinale. L'excroissance 160 est dimensionnée de sorte que la dimension transversale du conduit d'acheminement 102 au niveau de la jonction entre première face et deuxième face de l'excroissance est sensiblement égale à la dimension transversale du manchon dans sa portion intermédiaire 76, qui forme un dégagement de matière entre la portion chanfreinée 74 et la deuxième portion d'extrémité 78. Tel qu'illustré, l'excroissance 60 peut présenter une forme semblable, mais dans un agencement opposé, à celle de la portion chanfreinée 74 du manchon 66.

De plus, l'excroissance 160 est formée dans le tube de raccordement 92 de sorte que la longueur mesurée entre la deuxième face de l'excroissance, formant surface de butée longitudinale, et l'épaulement 116 est légèrement plus grande que la dimension longitudinale du manchon 66 entre l'extrémité libre 68 et la butée 84 délimitant la portion intermédiaire 76 de la portion chanfreinée 74.

L'excroissance 160 est constituée du même matériau constituant le tube de raccordement 92 mais peut alternativement être constitué d'un autre matériau favorisant sa déformation élastique.

Lors du montage de l'organe de projection 8 sur l'organe de distribution 6, le tube de raccordement 92 coulisse le long de la direction longitudinale A autour du manchon 66 rapprochant ainsi l'excroissance 160 du tube de raccordement 92 de la portion chanfreinée 74 du manchon 66. Le mouvement longitudinal implique un contact des deux surfaces formant rampe respectivement formées sur l'excroissance et sur la portion chanfreinée 74, de sorte que le déplacement longitudinal peut être continué avec des efforts moindres, au moins l'une de ses pièces se déformant élastiquement pour permettre la continuation de ce mouvement longitudinal. Le mouvement se continue jusqu'à ce que la portion chanfreinée 74 se loge dans le conduit d'acheminement 102 entre l'excroissance 160 et l'épaulement 116 du tube de raccordement 92. Dès lors, chacune des pièces reprend sa forme d'origine et l'excroissance 160 vient se positionner dans le dégagement formé par la portion intermédiaire 76, en bloquant, par butée contre la portion chanfreinée 74, de la sorte tout mouvement de l'organe de projection 8 le long de la direction longitudinale A.

Pour démonter l'organe de projection 8 de l'organe de distribution 6, un utilisateur doit écarter les pattes de fonctionnement l'une de l'autre pour déformer le manchon et agrandir la section de passage au niveau de l'excroissance, de manière à pouvoir libérer la portion chanfreinée 74 de l'espace délimité par l'excroissance 160 et l'épaulement 116 du tube de raccordement 92.

## Revendications

1. Dispositif de projection (2) de fluide pour un système de nettoyage d'une surface (164) d'un véhicule automobile, le dispositif de projection comprenant une électrovanne (3) configurée pour autoriser ou bloquer le passage de fluide en direction d'un organe de projection (8), ladite électrovanne comportant un système hydraulique (4) et un système électromagnétique (5), le système hydraulique (4) comprenant au moins un organe de distribution de fluide (6) qui comporte au moins un embout d'entrée de fluide (30), une chambre de circulation (28) et un embout de sortie de fluide (32) en communication fluidique avec l'organe de projection (8), le système électromagnétique (5) étant configuré pour autoriser ou bloquer le passage de fluide au travers de la chambre de circulation (28), **caractérisée en ce que** l'organe de projection (8) comprend au moins un tube de raccordement (92) et une buse de projection (94) formés d'un seul tenant, le tube de raccordement (92) étant directement fixé sur l'embout de sortie de fluide (32).

2. Dispositif de projection de fluide selon la revendication 1, **caractérisé en ce que** l'organe de projection (8) est fixé directement sur l'embout de sortie de fluide (32) par des moyens de fixation réversible (140).

3. Dispositif de projection de fluide selon la revendication précédente, **caractérisé en ce que** les moyens de fixation réversible (140) sont portés respectivement par l'embout de sortie de fluide (32) et par le tube de raccordement (92) de l'organe de projection (8), au moins l'un parmi l'embout de sortie de fluide (32) et le tube de raccordement (92) étant apte à prendre différentes positions par déformation élastique.

4. Dispositif de projection de fluide selon la revendication 3, **caractérisé en ce que** les moyens de fixation réversible (140) comportent un doigt d'encliquetage (156) formant saillie d'une paroi délimitant un manchon (66) formant l'embout de sortie de fluide (32), ledit doigt d'encliquetage étant configuré pour coopérer avec une trouée (146) formée dans la paroi délimitant le tube de raccordement (92).

5. Dispositif de projection de fluide selon la revendication 3, **caractérisé en ce que** les moyens de fixation réversible (140) comportent une excroissance (160) formant saillie d'une paroi délimitant le tube de raccordement (92) vers l'intérieur de ce tube de raccordement (92) et configurée pour coopérer avec une butée (84) formée en saillie d'un manchon (66) formant l'embout de sortie de fluide (32), après déformation élastique de la paroi porteuse de l'excroissance et/ou du manchon porteur de la butée.

6. Dispositif de projection de fluide selon la revendication 2, **caractérisé en ce que** les moyens de fixation réversible comportent un élément de blocage (148) distinct de l'organe de projection (8) et de l'embout de sortie de fluide (32), l'élément de blocage étant déformable élastiquement et apte à coopérer avec au moins une trouée (146, 148) formée dans la paroi délimitant le tube de raccordement (92).

7. Dispositif de projection de fluide selon l'une quelconque des revendications précédentes, **caractérisé en ce qu'**il comprend en outre un dispositif de détrompage (124).

8. Dispositif de projection de fluide selon la revendication précédente, **caractérisé en ce que** le dispositif de détrompage (124) comporte une pluralité de pattes de positionnement (126, 128) formant saillie du tube de raccordement (92) de manière à recouvrir au moins partiellement l'organe de distribution (6) et parmi lesquelles au moins une patte de positionnement présente une forme et/ou des dimensions différentes de celles des autres pattes de positionnement, le dispositif de détrompage (124) comportant en outre un muret (136) formé en périphérie de l'organe de distribution (6) pour coopérer avec la patte de positionnement (126) de forme et/ou de dimensions différentes de celle des autres pattes de positionnement.

9. Dispositif de projection de fluide selon l'une des revendications précédentes, **caractérisé en ce que** l'organe de projection (8) comporte un conduit d'acheminement (102), qui s'étend au sein de l'organe de projection de manière continue depuis le tube de raccordement (92) jusqu'à la buse de projection, et dans lequel est inséré l'embout de sortie de fluide (32), le conduit d'acheminement (102) comportant un épaulement (116) agencé entre deux segments du conduit d'acheminement (102) qui présentent des sections de passage différentes, l'épaulement (116) formant butée à l'insertion de l'embout de sortie de fluide (32) dans l'organe de projection (8).

10. Système de nettoyage d'une surface (164) d'un véhicule automobile comprenant un dispositif de projection de fluide selon l'une des revendications précédentes et une pompe acheminant un fluide de nettoyage à travers un conduit jusqu'à au moins une électrovanne (3) dudit dispositif de projection, l'électrovanne (3) étant configurée pour autoriser ou bloquer la projection du fluide sur la surface (164) via l'organe de projection (8).

## Patentansprüche

1. Fluidsprühvorrichtung (2) für ein System zur Reinigung einer Oberfläche (164) eines Kraftfahrzeugs, wobei die Sprühvorrichtung ein Magnetventil (3) umfasst, das dafür ausgelegt ist, den Durchgang von Fluid in Richtung eines Sprühorgans (8) zu ermöglichen oder zu blockieren, wobei das Magnetventil ein hydraulisches System (4) und ein elektromagnetisches System (5) aufweist, wobei das hydraulische System (4) mindestens ein Fluidverteilungsorgan (6) umfasst, das mindestens ein Fluideintrittsendstück (30), eine Zirkulationskammer (28) und ein Fluidaustrittsendstück (32), das mit dem Sprühorgan (8) in Fluidverbindung steht, aufweist, wobei das elektromagnetische System (5) dafür ausgelegt ist, den Durchgang von Fluid durch die Zirkulationskammer (28) zu ermöglichen oder zu blockieren, **dadurch gekennzeichnet, dass** das Sprühorgan (8) mindestens ein Anschlussrohr (92) und eine Sprühdüse (94) umfasst, die aus einem Stück ausgebildet sind, wobei das Anschlussrohr (92) direkt an dem Fluidaustrittsendstück (32) befestigt ist.

2. Fluidsprühvorrichtung nach Anspruch 1, **dadurch gekennzeichnet, dass** das Sprühorgan (8) durch Mittel zur reversiblen Befestigung (140) direkt an dem Fluidaustrittsendstück (32) befestigt ist.

3. Fluidsprühvorrichtung nach dem vorhergehenden Anspruch, **dadurch gekennzeichnet, dass** die Mittel zur reversiblen Befestigung (140) von dem Fluidaustrittsendstück (32) bzw. dem Anschlussrohr (92) des Sprühorgans (8) getragen werden, wobei das Fluidaustrittsendstück (32) und/oder das Anschlussrohr (92) geeignet sind, durch elastische Verformung verschiedene Positionen einzunehmen.

4. Fluidsprühvorrichtung nach Anspruch 3, **dadurch gekennzeichnet, dass** die Mittel zur reversiblen Befestigung (140) einen Rastfinger (156) aufweisen, der von einer Wand vorsteht, die eine Hülse (66) begrenzt, die das Fluidaustrittsendstück (32) bildet, wobei der Rastfinger dafür ausgelegt ist, mit einem Durchbruch (146) zusammenzuwirken, der in der Wand ausgebildet ist, die das Anschlussrohr (92) begrenzt.

5. Fluidsprühvorrichtung nach Anspruch 3, **dadurch gekennzeichnet, dass** die Mittel zur reversiblen Befestigung (140) einen Vorsprung (160) aufweisen, der von einer das Anschlussrohr (92) begrenzenden Wand zum Inneren dieses Anschlussrohres (92) hin vorsteht und dafür ausgelegt ist, mit einem Anschlag (84) zusammenzuwirken, der von einer Hülse (66) vorstehend ausgebildet ist, die das Fluidaustrittsendstück (32) bildet, nach elastischer Verformung der den Vorsprung tragenden Wand und/oder der den Anschlag tragenden Hülse.

6. Fluidsprühvorrichtung nach Anspruch 2, **dadurch gekennzeichnet, dass** die Mittel zur reversiblen Befestigung ein Blockierelement (148) aufweisen, das von dem Sprühorgan (8) und dem Fluidaustrittsendstück (32) verschieden ist, wobei das Blockierelement elastisch verformbar ist und geeignet ist, mit mindestens einem Durchbruch (146, 148) zusammenzuwirken, der in der das Anschlussrohr (92) begrenzenden Wand ausgebildet ist.

7. Fluidsprühvorrichtung nach einem der vorhergehenden Ansprüche, **dadurch gekennzeichnet, dass** sie außerdem eine Unverwechselbarkeitsvorrichtung (124) umfasst.

8. Fluidsprühvorrichtung nach dem vorhergehenden Anspruch, **dadurch gekennzeichnet, dass** die Unverwechselbarkeitsvorrichtung (124) mehrere Positionierlaschen (126, 128) aufweist, die von dem Anschlussrohr (92) vorstehen, so dass sie das Verteilungsorgan (6) wenigstens teilweise bedecken, und von denen mindestens eine Positionierlasche eine Form und/oder Abmessungen aufweist, die von denjenigen der anderen Positionierlaschen verschieden sind, wobei die Unverwechselbarkeitsvorrichtung (124) außerdem eine Leiste (136) aufweist, die am Umfang des Verteilungsorgans (6) ausgebildet ist, um mit der Positionierlasche (126) zusammenzuwirken, die eine Form und/oder Abmessungen aufweist, die von denjenigen der anderen Positionierlaschen verschieden sind.

9. Fluidsprühvorrichtung nach einem der vorhergehenden Ansprüche, **dadurch gekennzeichnet, dass** das Sprühorgan (8) eine Förderleitung (102) aufweist, die sich innerhalb des Sprühorgans durchgehend vom Anschlussrohr (92) bis zur Sprühdüse erstreckt und in die das Fluidaustrittsendstück (32) eingesetzt ist, wobei die Förderleitung (102) einen Absatz (116) aufweist, der zwischen zwei Abschnitten der Förderleitung (102) angeordnet ist, die unterschiedliche Durchgangsquerschnitte aufweisen, wobei der Absatz (116) einen Anschlag für das Einsetzen des Fluidaustrittsendstücks (32) in das Sprühorgan (8) bildet.

10. System zur Reinigung einer Oberfläche (164) eines Kraftfahrzeugs, welches eine Fluidsprühvorrichtung nach einem der vorhergehenden Ansprüche und eine Pumpe, die ein Reinigungsfluid durch eine Leitung bis zu mindestens einem Magnetventil (3) der Sprühvorrichtung fördert, umfasst, wobei das Magnetventil (3) dafür ausgelegt ist, das Sprühen des Fluids über das Sprühorgan (8) auf die Oberfläche (164) zu ermöglichen oder zu blockieren.

## Claims

1. A fluid spraying device (2) for a system for cleaning a surface (164) of a motor vehicle, the spraying device comprising a solenoid valve (3) configured to allow or prevent the passage of fluid in the direction of a spraying member (8), said solenoid valve having a hydraulic system (4) and an electromagnetic system (5), the hydraulic system (4) comprising at least one fluid distribution member (6) which has at least one fluid inlet endpiece (30), a circulation chamber (28), and a fluid outlet endpiece (32) in fluidic communication with the spraying member (8), the electromagnetic system (5) being configured to allow or prevent the passage of fluid through the circulation chamber (28), **characterized in that** the spraying member (8) comprises at least one coupling tube (92) and a spray nozzle (94) which are formed in one piece, the coupling tube (92) being directly fixed to the fluid outlet endpiece (32).

2. The fluid spraying device as claimed in claim 1, **characterized in that** the spraying member (8) is fixed directly to the fluid outlet endpiece (32) by reversible fixing means (140).

3. The fluid spraying device as claimed in the preceding claim, **characterized in that** the reversible fixing means (140) are borne respectively by the fluid outlet endpiece (32) and by the coupling tube (92) of the spraying member (8), at least one from among the fluid outlet endpiece (32) and the coupling tube (92) being able to take different positions by elastically deforming.

4. The fluid spraying device as claimed in claim 3, **characterized in that** the reversible fixing means (140) have a snap-fastening finger (156) projecting from a wall delimiting a sleeve (66) forming the fluid outlet endpiece (32), said snap-fastening finger being configured to interact with a hole (146) formed in the wall delimiting the coupling tube (92).

5. The fluid spraying device as claimed in claim 3, **characterized in that** the reversible fixing means (140) have a protuberance (160) which projects from a wall delimiting the coupling tube (92) toward the inside of this coupling tube (92) and is configured to interact with a stop (84) projecting from a sleeve (66) forming the fluid outlet endpiece (32), after elastic deformation of the wall bearing the protuberance and/or of the sleeve bearing the stop.

6. The fluid spraying device as claimed in claim 2, **characterized in that** the reversible fixing means have a locking element (148) separate from the spraying member (8) and from the fluid outlet endpiece (32), the locking element being elastically deformable and able to interact with at least one hole (146, 148) formed in the wall delimiting the coupling tube (92).

7. The fluid spraying device as claimed in any one of the preceding claims, **characterized in that** it moreover comprises a poka-yoke device (124).

8. The fluid spraying device as claimed in the preceding claim, **characterized in that** the poka-yoke device (124) has a plurality of positioning tabs (126, 128) projecting from the coupling tube (92) so as to at least partially cover the distribution member (6) and among which at least one positioning tab has a shape and/or dimensions different to those of the other positioning tabs, the poka-yoke device (124) moreover having a low wall (136) formed at the periphery of the distribution member (6) to interact with the positioning tab (126) that has a shape and/or dimensions different to those of the other positioning tabs.

9. The fluid spraying device as claimed in one of the preceding claims, **characterized in that** the spraying member (8) has a conveying duct (102), which extends within the spraying member continuously from the coupling tube (92) to the spray nozzle, and in which is inserted the fluid outlet endpiece (32), the conveying duct (102) having a shoulder (116) arranged between two segments of the conveying duct (102) that have different passage cross sections, the shoulder (116) forming an end stop for the insertion of the fluid outlet endpiece (32) into the spraying member (8).

10. A system for cleaning a surface (164) of a motor vehicle, comprising a fluid spraying device as claimed in one of the preceding claims and a pump conveying a cleaning fluid through a duct to at least one solenoid valve (3) of said spraying device, the solenoid valve (3) being configured to allow or prevent the spraying of the fluid onto the surface (164) via the spraying member (8).
